# FASCICULE DE BREVET EUROPEEN

(11) **EP 0 541 410 B1**
(45) Date de publication et mention de la délivrance du brevet: **15.05.1996**
(21) Numéro de dépôt: 92402708.9
(22) Date de dépôt: 05.10.1992
(51) Int. Cl.: H04L 12/43

(54) **Procédé et installation de communication, à transmission de signaux numériques**
Kommunikationsverfahren und Einrichtung zur Übertragung digitaler Signale
Communication method and installation for transmitting digital signals

(30) Priorité: 07.10.1991 FR 9112312
(43) Date de publication de la demande: 12.05.1993
(73) Titulaire: MATRA COMMUNICATION, F-29101 Quimper (FR)
(72) Inventeur: Billon, Thierry, F-92800 Puteaux (FR)
(74) Mandataire: Fort, Jacques

(56) Documents cités:
- US-A- 3 961 139
- IEEE COMMUNICATIONS MAGAZINE. vol. 24, no. 12, Décembre 1986, NEW YORK, US pages 16 - 22 J. BRANDSMA ET AL. 'A fibre optic ring for voice and data'

## Description

La présente invention concerne les procédés et installations de transmission numérique sur des réseaux à commutation de circuits, permettant à au moins une station maître (généralement un commutateur-concentrateur) de dialoguer avec des stations esclaves, la transmission s'effectuant sous forme d'un multiplex temporel, dit primaire, constitué par un train d'impulsions binaires découpé en trames identiques comprenant chacune un même nombre n de canaux ou intervalles de temps, dont l'un sert généralement à la synchronisation.

De tels procédés et installations sont mis en oeuvre à l'heure actuelle. Ils utilisent en général la modulation MIC ou une de ses variantes (MICD ou MICDA). Diverses normes de transmission ont été établies par des organismes tels que le CCITT (Red Book, Recommendation G721, Tome III-3, octobre 1984) et par le CEPT. La norme CEPT pour transmission sur les réseaux filaires prévoit par exemple, en application de la recommandation CCITT G706, une modulation à 2,048 Mbits/s, avec découpage en trames de 125 µs comprenant n = 32 canaux de huit éléments binaires par trame. Le canal zéro sert à la synchronisation. Les autres canaux permettent de transmettre des données, des signaux de parole, ou des informations de signalisation.

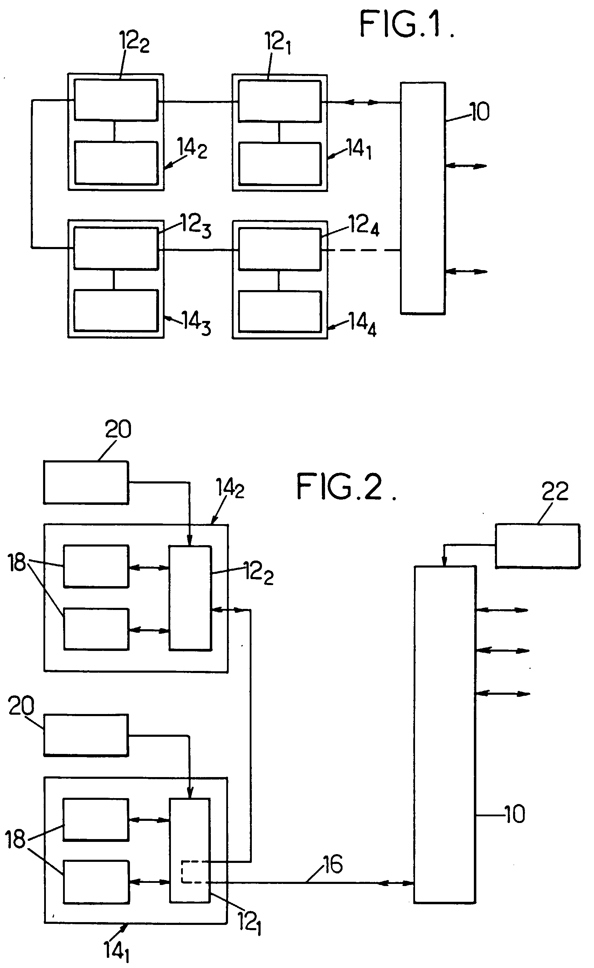

L'architecture de réseau la plus simple est en étoile : la station maître est reliée point à point à chaque station esclave par au moins une liaison multiplex. Cette solution n'utilise qu'une partie de la capacité du multiplex dans la plupart des cas. On a donc proposé une architecture dite à "routage et insertion" (drop and insert), montrée schématiquement en traits pleins sur la figure 1. La station maître 10 dialogue avec plusieurs stations esclaves 14₁, 14₂,... par l'intermédiaire d'une même liaison multiplex. Chaque station comporte un organe de brassage 12₁, 12₂, 12₃, 12₄,... qui distribue à la station les seuls canaux ou intervalles de temps dont on estime qu'elle a besoin. Les autres canaux sont routés vers la station esclave suivante, c'est-à-dire qu'on passe la station. Ainsi on peut utiliser un seul lien multiplex pour plusieurs esclaves.

La solution où les stations esclaves sont simplement en chaîne présente un inconvénient. Toute panne sur le lien ou sur une station esclave entraîne la perte de tous les esclaves en aval s'il n'est pas prévu un second lien, destiné à assurer une redondance. Pour sécuriser l'installation, on peut créer une boucle se refermant sur la station maître, comme indiqué en tirets sur la figure 1. La perte d'un esclave ou d'un lien ne se traduit plus alors par la perte des esclaves en aval, car la station maître peut alors reconstituer un chemin de connexion vers les esclaves, par le côté non rompu de la boucle.

La nécessité d'organes de brassage pour mettre en oeuvre la technique de "routage et insertion" ne représente pas une complication matérielle réelle, car souvent les stations esclaves doivent comporter de tels organes pour leurs besoins propres. Mais les unités de brassage utilisées à l'heure actuelle nécessitent d'être reprogrammées chaque fois que l'on veut modifier la répartition entre canaux à router et canaux à insérer. La programmation peut se faire sur place, ce qui réduit la flexibilité car il faut qu'un opérateur se déplace sur chaque site à esclaves. Elle peut se faire à distance, mais cela exige des liens et protocoles de signalisation spécifique et accroît la complexité : une modification des connexions (par exemple pour pallier les effets d'une panne d'une station dans la boucle ou pour modifier la capacité d'une ou plusieurs stations esclaves) exige de reconfigurer tous les éléments de la chaîne. Pour qu'une télécommande soit possible, le maître doit avoir une connaissance de toutes les connexions et notamment de la configuration en boucle ou chaînée, ainsi que de la position des esclaves le long des boucles ou chaînes.

On connaît encore (US-A-3 961 139) une installation de communication mettant en oeuvre un multiplex temporel, dit aussi TDMA, ayant une station maître reliée en boucle à des stations esclaves et contenant des moyens de gestion de la boucle, par allocation dynamique d'intervalles de temps. Mais la station maître doit connaître a priori la constitution complète de la boucle.

L'invention vise à fournir un procédé et un dispositif du type ci-dessus défini répondant mieux que ceux antérieurement connus aux exigences de la pratique. Elle vise notamment à obtenir certains au moins des caractères suivants :
- possibilité de reconfiguration sans intervention manuelle locale aux stations esclaves, sans nécessité d'affectation de canaux spécifiques, sans nécessité de signalisation spécifique à distance à partir de la station maître ;
- inutilité pour la station maître de connaître la façon dont les esclaves sont connectés entre eux (routés ou non, en boucle ou chaînés) ;
- inutilité pour les stations esclaves de connaître la façon dont elles sont connectées à la station maître ou leur position dans un chaînage ou une boucle.

Dans ce but l'invention propose notamment un procédé de communication à transmission de signaux numériques entre une station maître et des stations esclaves suivant la revendication 1.

On voit que le procédé est applicable pour toutes les stations esclaves qui peuvent être connectées à au moins deux liaisons. Cette condition est automatiquement réalisée pour toute station propre à être connectée dans un chaînage ou une boucle en vue d'un fonctionnement en "drop and insert" et/ou pour toute station esclave comportant au moins deux liaisons dont une assure une redondance.

On voit qu'il suffit de prévoir l'organe de brassage de façon que l'initialisation (par exemple à la mise sous tension) effectue un routage complet, c'est-à-dire court-circuite ou passe la station. En d'autres termes, chaque canal ou intervalle de temps d'ordre i à la réception (ou l'émission) d'une liaison impaire, d'ordre 2K + 1 par exemple, est connecté sur l'intervalle de temps d'ordre i d'émission (respectivement de réception) de la liaison paire d'ordre 2K + 2, et ce pour toutes les liaisons auxquelles les stations esclaves sont raccordées, sans préjuger d'où viennent et où vont ces liaisons.

L'organe de brassage réalise donc, pour chaque station esclave, autant de boucles internes qu'il y a de couples.

L'invention s'applique également aux stations esclaves qui ont un nombre impair de liaisons, ce qui peut notamment être le cas de la station terminale d'un chaînage. Dans ce cas une des liaisons peut être connectée en boucle interne. Cela n'influe en rien sur les couples bouclés mais se traduit seulement par une utilisation de liaison isolée.

Si ultérieurement, à l'issue d'une panne ou lors d'une extension de capacité d'une station esclave, une liaison supplémentaire est établie alors qu'il y avait un nombre impair de liaisons, une boucle additionnelle est immédiatement créée par l'organe de brassage.

La seule opération à effectuer localement sur une station esclave. est alors de programmer son unité de brassage à l'origine, pour identifier le canal de signalisation qui lui est affecté. La même identification est reportée dans la station maître. Après initialisation, chaque organe de brassage se met à l'écoute sur le canal approprié, qu'on peut considérer comme un intervalle de temps de rendez-vous.

Dans le cas où un nombre pair 2K de liaisons particulières de la station maître ne sont raccordées qu'à une seule station esclave, qui forme K boucles internes, il n'y a pas de gain de connectivité par mise en oeuvre de l'invention. Mais l'invention permet alors à la station maître d'effectuer les tests de continuité et l'existence de K boucles n'interdit en rien l'utilisation de tous les intervalles de temps des liaisons pour cet esclave.

L'invention propose également une installation permettant de mettre en oeuvre le procédé ci-dessus défini, suivant la revendication 6.

Dans le but de permettre, entre la station maître et plusieurs stations esclaves, des connexions plus élaborées que de simples chaînages avec ou sans boucle, l'invention propose aussi un procédé du genre ci-dessus défini, applicable qu'il y ait ou non chaînage ou boucle, caractérisé en ce que sur chacun des multiplex au départ de la station maître prévus pour être connectés directement ou par routage à une station esclave, on réserve pour cette station esclave, le même ensemble d'intervalles de temps (même nombre et mêmes rangs), le nombre d'intervalles de temps de cet ensemble étant déterminé par le premier entier supérieur ou égal au nombre total d'intervalles de temps nécessaires à la station, divisé par le nombre de multiplex non utilisés à fin de redondance-départ de la station maître vers cette station esclave.

L'invention concerne également les composants d'une telle installation, et notamment la station maître et les stations esclaves, qui doivent avoir les constitutions nécessaires pour effectuer les opérations ci-dessus. Il doit être entendu que la portée du présent brevet s'étend également à de tels constituants originaux.

L'invention sera mieux comprise à la lecture de la description qui suit de modes particuliers de réalisation donnés à titre d'exemples non limitatifs. La description se réfère aux dessins qui l'accompagnent, dans lesquels :
- la figure 1, déjà mentionnée, est un schéma de principe montrant une installation suivant l'art antérieur ;
- les figures 2 et 3 sont des schémas de principe montrant deux modes de réalisation possibles d'une installation suivant l'invention, respectivement avec deux stations esclaves chaînées et avec deux stations esclaves associées à quatre liens avec la station maître pour constituer deux boucles ;
- la figure 4 montre une adaptation possible de l'invention à une installation de radio-téléphonie suivant la norme GSM ;
- la figure 5 est un schéma général d'exemple de réalisation possible d'une installation suivant l'invention ; et
- la figure 6 représente une affectation possible des intervalles de temps sur les différents multiplex aux différentes ,stations, conformément à l'arrangement de la figure 5, les liaisons MIC 1, MIC 2 et MIC 3 étant montrées superposées.

L'installation montrée en figure 2 comporte, comme dans le cas de la figure 1, une station maître 10 comportant un lien de transmission multiplex 16, par exemple de type MIC, avec deux stations esclaves 14₁ et 14₂ ayant chacune une unité de brassage 12₁ ou 12₂. Chaque station esclave comporte des terminaux 18, par exemple des émetteurs-récepteurs de radio-téléphonie. Chaque unité de brassage est munie de moyens de programmation 20, telles qu'une roue codeuse ou une mémoire morte programmable à seule fin de lui donner son identité.

Conformément à l'invention, dans le cas où elle est appliquée à une installation où les stations esclaves sont simplement chaînées, chacune des stations est prévue de façon à former, lorsqu'elle est initialisée, une boucle pour chaque canal, ce bouclage étant dependant impossible pour la station terminale. Dans le cas où il y a un seul lien 16, les boucles internes sont réalisées par chacune des stations esclaves par établissement de connexions entre canaux homologues permettant le chaînage de toutes les stations.

Si en revanche la liaison entre la station maître et les stations esclaves chaînées est sécurisée par un second lien identique au premier et redondant, les boucles internes, initialement établies par chacune des stations esclaves par connexion entre les canaux homologues, permettent une connexion de chaque station esclave soit du côté du lien servant à la communication normale, soit du côté du lien redondant.

La station maître 10 comporte de son côté une mémoire programmable 22 permettant d'indiquer à la station maître :
- l'identité de chacune des stations esclaves,
- le nombre de canaux (ou intervalles de temps) dont chaque esclave a besoin, ce nombre pouvant évoluer au cours du temps, par exemple en cas de changement de topologie du réseau ou en cas d'augmentation de la capacité d'une station esclave,
- les extrémités des liens, côté station maître, où une station esclave est susceptible d'être connectée.

Une fois ces informations chargées en mémoire 22, un dialogue peut être établi entre le maître et chaque esclave et permet de configurer l'esclave, en particulier pour "déclarer" à l'esclave les intervalles de temps qui lui sont affectés. Le dialogue est établi par l'intermédiaire d'un canal de signalisation affecté à l'esclave et sur lequel celui-ci se met à l'écoute immédiatement après initialisation.

Dans la mémoire de chaque unité de brassage est chargé un programme de connexion à la station maître en fonction des ordres reçus de la station maître. Ce programme met en oeuvre un algorithme de connexion qui est indépendant de l'existence d'autres esclaves dans le chaînage.

Dans le cas où il y a plusieurs liens MIC connectés à l'esclave, l'écoute permet de réaliser la connexion même en cas de panne de certains liens ou tronçons de liens. Les collisions sont évitées, puisqu'aucun esclave n'a la même identité qu'un autre.

Dans cette réalisation, l'affectation des canaux s'effectue de façon très simple : il suffit que le maître émette, sur les intervalles de temps de rendez-vous correspondants aux stations esclaves à utiliser, une demande de connexion.

Dans le cas où un canal de signalisation est affecté à chaque esclave, il n'est même pas nécessaire d'effectuer un appel sélectif, car l'information "identité de l'esclave" est déjà représentée par le numéro d'ordre du canal de signalisation. Cependant, il peut être préférable de prévoir un appel sélectif, pour des raisons de sécurisation ou de compatibilité avec les protocoles utilisés.

L'ordre envoyé par la station maître peut être un ordre d'insertion d'un canal, conduisant à rompre la boucle interne pour ce seul canal, alors que les autres intervalles de temps restent routés, aussi bien qu'un ordre de déconnexion (ordre de dé-insertion) qui se traduira pour l'esclave concerné par le rétablissement de la boucle interne de ce canal. L'ordre de déconnexion est donc implicitement un ordre de routage.

Les appels sélectifs ou demandes de connexion seront envoyés par la station maître cycliquement sur ses différentes extrémités de liens, pour pallier les pannes éventuelles de certains tronçons. Les appels doivent toutefois être à cadence suffisamment lente pour être compatible avec les rythmes de changement de lien au niveau des esclaves : si par exemple un esclave est susceptible de répondre sur 2K extrémités de liens raccordées à la station maître (c'est-à-dire si l'esclave est susceptible de constituer K boucles internes) et si le rythme de changement de lien au niveau de l'esclave est t, la station maître doit rester pendant un temps supérieur à K.t sur un lien (liaison MIC) donné.

Il faut encore remarquer que le canal de signalisation reste disponible en permanence : ainsi, à tout moment, la station maître peut donner des ordres à chacune des stations esclaves. Par exemple, la station maître peut ordonner à une station esclave de se déconnecter, ce qui réintroduit, dans le chaînage, le canal ou les canaux qui avaient été insérés. Ces canaux deviennent donc disponibles pour d'autres stations esclaves.

Le canal de signalisation constitue de plus chien de garde. S'il vient à disparaître parce que par exemple un lien MIC est rompu, la disparition est détectée par les stations maître et esclaves. La procédure de connexion peut alors être réinitialisée sur les liens qui restent disponibles.

La disposition qui vient d'être décrite est susceptible de variantes. En particulier, il est possible de prévoir un seul canal de signalisation, et non pas un canal par esclave. Mais dans ce cas l'appel à partir de la station maître doit être sélectif. Il existe un risque de collision sur le canal de signalisation et ce risque doit être traité par un protocole approprié.

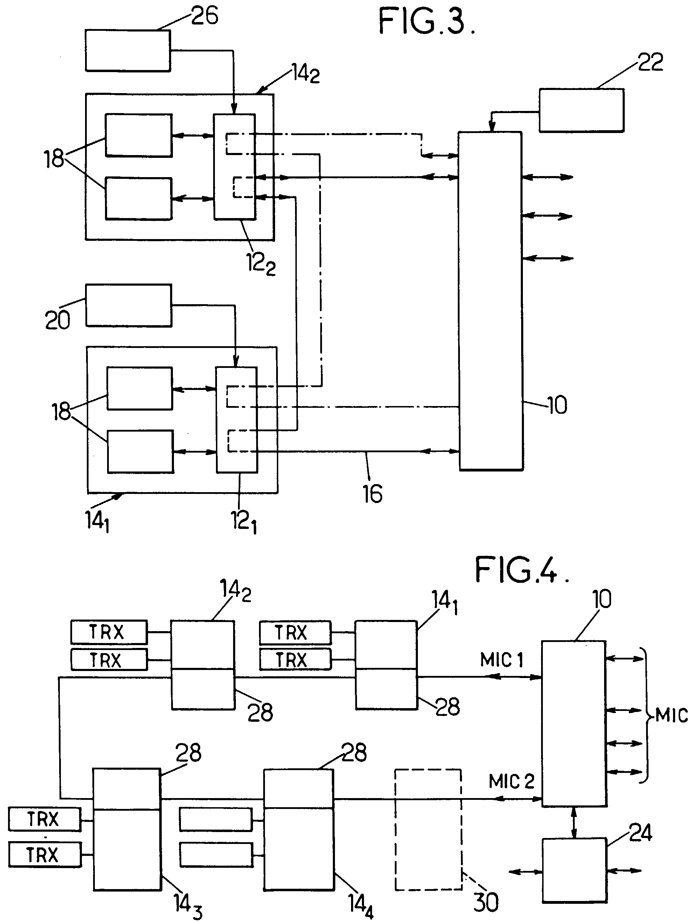

Les indications qui viennent d'être données pour le montage chaîné de la figure 2 sont également valables dans le cas d'un montage en boucle du genre montré en traits pleins sur la figure 3. La station maître est reliée à plusieurs esclaves à partir des mêmes extrémités de lien MIC. La transparence de la station maître à l'égard de la boucle est réalisée en gérant, dans la station maître, les liens filaires MIC par association d'une partition de liaison MIC (la partition étant réalisée par un canal ou plusieurs, suivant la capacité nécessaire) à chaque esclave. Les partitions évoluent sans signalisation spécifique, puisque la station maître est informée du nombre de connexions à effectuer sur chaque esclave et peut les commander par le canal qui est affecté à cet effet.

En résumé, on arrive ainsi à un fonctionnement en "drop and insert" et avec connexion en boucle ou chaînée de façon transparente pour tout le réseau.

La figure 3 montre l'état d'initialisation dans le cas de stations esclaves montées en boucle et ayant plusieurs liens MIC avec la station maître : il est alors possible d'effectuer le bouclage de plusieurs façons, la figure 3 ne constituant qu'un exemple.

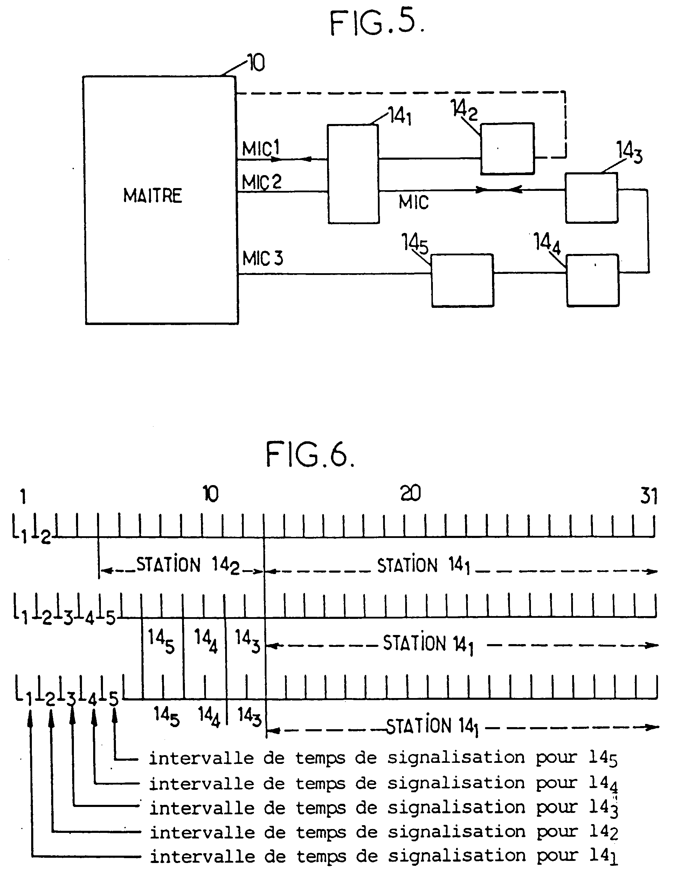

On décrira maintenant sommairement, en faisant référence à la figure 4, une constitution possible d'installation destinée à la radio-téléphonie cellulaire du type prévu par la norme GSM (Groupe Special Mobiles). La station maître 10 montrée en figure 4 est constituée par un commutateur-concentrateur susceptible d'être relié par des liens filaires à des groupes de stations terminales de base constituant les stations esclaves 14₁, 14₂, etc. Plusieurs commutateurs-concentrateurs sont eux-mêmes reliés par une voie filaire à un commutateur de haut niveau 24, qui n'est pas concerné par l'invention. Les quatre stations esclaves 14₁, 14₂, 14₃, 14₄ montrées en figure 4 sont montées de façon à constituer une boucle reliée à deux entrées MIC de la station maître 10. Chaque station esclave comporte des terminaux TRX destinés chacun à traiter une trame de multiplex temporel. Ces terminaux peuvent être reliés à des vocodeurs déportés 28 permettant de multiplexer quatre communications en phonie sur un canal à 64 Kbits/s : chaque TRX n'exige alors que deux canaux.

Si on considère à titre d'exemple le cas d'une boucle ayant cinq stations esclaves à deux TRX chacune, vingt canaux sont nécessaires. De plus, dans le cas envisagé plus haut et considéré comme avantageux où chaque station esclave nécessite un canal particulier de signalisation, vingt-cinq canaux sont nécessaires : une seule liaison MIC à 2,048 Mbit/s suffit en utilisant la technique de "drop and insert" alors qu'il faudrait cinq liaison MIC en cas de jonction point à point depuis la station maître 10.

Les avantages qui viennent d'être donnés existent aussi bien dans le cas d'un simple chaînage que dans le cas, illustré sur la figure 4, d'une boucle refermée sur la station maître 10, ce qui exige deux liaisons MIC, dont une destinée à sécuriser le système. Pour assurer la même sécurité en cas de liaison point à point, il faudrait dix liaisons MIC.

Comme on l'a déjà indiqué, chaque station esclave, lorsqu'elle est mise sous tension, effectue un bouclage interne sur tous les canaux de liaison MIC₁ et sur tous les canaux du MIC₂, émission sur réception et réciproquement. Chaque station esclave, 14₁ par exemple, rompt seulement la boucle pour l'intervalle de temps de rendez-vous, d'ordre i déterminé. Elle écoute cycliquement sur la liaison MIC₁ pendant une durée déterminée, par exemple une seconde, puis la liaison MIC₂ sur le même intervalle de temps, jusqu'à ce qu'elle reçoive un appel. L'alternance d'écoute permet de pallier d'éventuels défauts sur une des liaisons.

La station maître, ayant été programmée pour gérer les stations esclaves sur les liaisons MIC₁ et MIC₂ déduit, par un algorithme qui peut être le même que dans chaque station esclave, les intervalles de temps de rendez-vous pour chaque station esclave. En conséquence, lorsque le maître veut connecter une station esclave dont l'identification j (j étant un numéro de canal autre que zéro) il émet sur la liaison MIC₁, c'est-à-dire périodiquement à la cadence de renouvellement des trames, un appel. L'appel est répété, en l'absence de réponse, pendant une durée déterminée, par exemple de deux secondes. En l'absence de réponse au bout de ce laps de temps, il effectue l'appel sur la liaison MIC₂ jusqu'à connexion.

En principe, en l'absence de panne, la connexion des canaux affectés à une station esclave doit intervenir dès le premier appel sur la liaison MIC₁. Il faut noter que la station maître peut connecter plusieurs stations esclaves en même temps, par un fonctionnement parallèle, car des canaux différents sont affectés aux différentes stations esclaves.

Une fois une station esclave connectée, la station maître (dans laquelle est chargée l'information du nombre de TRX géré par chaque station esclave) lui affecte le nombre de canaux nécessaire. Cette affectation s'effectue sur la liaison MIC₁ en l'absence de panne. En cas de panne sur la liaison MIC₁ ou en cas de rupture de jonction de station esclave, la connexion s'effectue sur la liaison MIC₂ pour la partie en aval de l'emplacement de panne.

Dans le cas, donné à titre d'exemple, de cinq stations esclaves du genre montré en figure 4, les cinq stations esclaves se verront affectées cinq partitions disjointes, de chacune cinq canaux dont un pour la signalisation. Il est avantageux d'effectuer l'affectation en utilisant d'abord les intervalles de temps de rang le plus élevé. Il reste, avec cinq stations esclaves, cinq intervalles de temps disponibles ; ils permettent par exemple d'ajouter une station esclave supplémentaire 30 à n'importe quel moment. Aucune intervention sur les autres stations ne sera alors nécessaire. La reconnexion s'effectue de façon automatique, d'abord sur la liaison MIC₁ obligatoirement du fait de la coupure temporaire nécessaire sur la liaison MIC₂. Si la station esclave supplémentaire 30 est insérée entre deux stations esclaves préexistantes, il y aura temporairement liaison par MIC₂ des stations placées en aval de la station insérée.

Ce qui a été décrit jusqu'ici concerne des connexions en chaîne et en boucle, où chaque station esclave dans la même chaîne reçoit un nombre de liaisons MIC identique. L'invention permet également des modes de connexion plus élaborées, telle celle représentée en figure 5, où toutes les stations ne sont pas connectées à un même nombre de liens MIC, où les stations 14₁ et 14₂ sont dans une chaîne simple, les stations 14₁, 14₃, 14₄ et 14₅ participent à un chaînage bouclé. On constate aussi que seule la station 14₁ est raccordée à la station maître par deux liaisons MIC, et qu'une connexion en étoile vers les stations 14₂ et 14₃ y est réalisée. On voit que le MIC 3, qui réalise la boucle , est un MIC redondant pour les stations 14₁, 14₃, 14₄, 14₅.

On décrit ci-dessous la façon dont doivent être alloués les intervalles de temps aux différentes stations, permettant d'obtenir le fonctionnement d'un arrangement suivant la figure 5. Il s'agit en fait d'un mécanisme général permettant le fonctionnement de toute station esclave, qu'elle soit ou non dans une chaîne ou une boucle.

On notera que ni la station maître, ni les stations esclaves, connaissent l'existence ou non de ces chaînes ou de ces boucles. Le maître gère les stations esclaves de façon indépendante les unes des autres. Il doit simplement connaître, pour chaque station séparément : son identité (le rang de l'intervalle de temps de signalisation), sa capacité (nombre d'intervalles de temps nécessaires), les liens MIC qui le relient à la station esclave, l'existence de liens MIC redondants pour cette station (lorsque l'on installe une station dans une boucle, on informe simplement le maître que cette station a un lien MIC redondant).

Si M est le nombre de MIC connectés à une station (non compris les MIC redondants éventuels), le maître divise le nombre d'intervalles de temps nécessaire à cette station par le nombre M et prend le premier entier supérieur ou égal à ce nombre. Ce résultat lui donne le nombre d'intervalles de temps à réserver sur chaque lien MIC, pour cette station. La réservation s'effectue de telle manière que l'on ait le même ensemble d'intervalles de temps sur chacun des multiplex, c'est-à-dire le même nombre et aux mêmes rangs. Les intervalles de temps qui seront affectés à la station esclave (demande de connexion) seront nécessairement dans cet ensemble.

Le premier intérêt est de répartir de façon homogène tous les intervalles de temps nécessaires à une station sur tous les MIC. La perte d'un MIC, s'il n'y a pas de redondance et si plusieurs MIC sont connectés à la station, ne se traduit pas par la perte de toute la capacité.

Mais l'intérêt majeur réside dans le fait que, plutôt que de remplir les MIC un à un, on minimise l'occupation de chacun des MIC pour cette station, permettant alors de router ces MIC, conformément à l'invention, vers un maximum d'autres stations esclaves.

Dans l'exemple de la figure 5, on doit déclarer cinq stations à la station maître : la station 14₁, connectée sur deux MIC (MIC 1 et MIC 2) et un MIC redondant (le MIC 3 qui chaîne aussi d'autres stations en boucle) ; la station 14₂, connectée sur un MIC (MIC 1), sans redondance ; la station 14₃, connectée sur un MIC (MIC 2) et avec un MIC redondant, le MIC 3 ; de même pour les stations 14₄ et 14₅.

Par exemple la station 14₁ nécessite trente huit intervalles de temps, la 14₂ nécessite six intervalles de temps, et les stations 14₃, 14₄ et 14₅ nécessitent chacune deux intervalles de temps.

Une fois les stations déclarées, en prenant pour hypothèse qu'elles ont été déclarées dans l'ordre de leur indice (ce qui n'est pas requis) et que les intervalles de temps de signalisation réservés aux stations ont le même rang que leur identité, (c'est-à-dire 1 pour la station 14₁, 2 pour la station 14₂, 3 pour la station 14₃ etc...), la station maître aura affecté les intervalles de temps représentant les trente et un intervalles de temps des trois MIC partant de la station maître, comme le montre la figure 6.

Pour la station 14₁, vingt intervalles de temps (de rang 1 pour la signalisation et de rangs 13 à 31 pour ses autres besoins) sont réservés sur chacun des MIC.

Le même procédé est appliqué pour les autres stations.

Sans tenir compte du MIC redondant, on dispose bien des intervalles de temps nécessaires à chacune des stations, répartis sur tous les MIC raccordés à chaque stations. Une fois les ordres de connexion donnés à une station, on voit que tous les autres intervalles de temps non nécessaires à cette station sont routés vers les autres stations.

Le MIC 3 est redondant pour les stations 14₁, 14₃, 14₄ et 14₅. On voit que, quel que soit le MIC qui tombe en panne (MIC 1 ou MIC 2, ou bien n'importe quel MIC reliant les stations 14₁, 14₃, 14₄, 14₅), le MIC 3 prendra la relève. Dans cet exemple, seule la station 14₂ n'est pas protégée contre une panne de MIC. Il suffirait de la relier à la station maître pour former une boucle, comme le montre la ligne tirets de la figure 5, pour la protéger.

L'invention s'applique à toutes les configurations du type de la figure 5, avec la restriction qu'il ne peut y avoir, à partir d'une station esclave, plus de liaisons MIC vers l'amont que de liaisons MIC issues de l'aval. Ces liaisons MIC ves l'amont peuvent être dirigées chacune vers des stations esclaves différentes ou, s'il s'agit d'une station terminale en bout de chaîne, peuvent être rebouclées à la station maître, ou, tout simplement, ne pas exister si aucun chaînage n'est nécessaire.

On voit alors que, même si une station esclave est seule à être raccordée à la station maître par un ou plusieurs MIC, tous les mécanismes propres à l'invention s'appliquent. Si le nombre de multiplex est 2K, on aura réalisé K boucles, si le nombre de multiplex est 2K+1, on aura réalisé K boucles ; et une liaison multiplex n'est pas routée. La station participe à des chaînes ou des boucles où il n'y a qu'une seule station.

Comme, conformément à l'invention, chaque station esclave est gérée séparément par la station maître, et que les mécanismes dans les stations esclaves sont indépendants des autres stations, on voit que l'invention permet de gérer des connexions en "drop and insert" à partir de la station maître sans que celle-ci en connaisse l'existence.

Il n'est pas nécessaire de décrire ici la forme donnée aux messages d'appel ou de transfert de parole, car leur structure peut être classique. Il faut seulement noter qu'il est souhaitable que chaque station esclave place, sur le côté de la boucle qui ne sert pas à la communication de signaux utiles avec la station de base, des éléments binaires de bourrage groupés suivant une configuration prédéterminée et reconnaissable.

## Revendications

1. Procédé de communication à transmission de signaux numériques entre une station maître (10) et des stations esclaves (14) sur un réseau comprenant au moins une station maître (10) munie de liaisons de transmission numérique (16) par multiplex temporel, sous forme d'une trame répétitive de n canaux ou intervalles de temps, avec les stations esclaves constituant un groupe associé aux dites liaisons et ayant chacune un organe de brassage (12) commandable pour insérer un canal quelconque dans la station respective ou le router en passant la station, tel que, pour établir la communication et affecter à chaque station esclave un ou plusieurs canaux d'ordre i déterminé parmi les n canaux et après avoir affecté à chaque station esclave un canal de signalisation qui lui est propre,
(a) on initialise, localement et automatiquement, les organes de brassage (12) de toutes les stations esclaves (14), puis
(b) on provoque les insertions nécessaires pour chaque station par émission, sur le canal de signalisation de la station esclave respective (14) et à partir de la station maître (10), d'au moins un ordre de commande d'organe de brassage (14),
caractérisé en ce qu'on effectue l'initialisation en connectant l'un à l'autre les canaux d'émission et de réception de chaque couple constitué de deux canaux homologues sur deux liaisons de façon à passer toutes les stations.

2. Procédé selon la revendication 1, caractérisé en ce que :
(c) on provoque une déconnexion éventuelle par envoi d'un ordre identifiant la station esclave (14) appropriée, ledit ordre de déconnexion constituant un ordre de routage implicite.

3. Procédé selon la revendication 1 ou 2, caractérisé en ce que l'ordre ou chaque ordre est émis avec une adresse d'identification de la station esclave (14).

4. Procédé selon la revendication 1, 2 ou 3, caractérisé en ce que, après initialisation et/ou après une panne, on effectue automatiquement la connexion au maître (10) par un algorithme d'écoute cyclique du canal déterminé qui constitue un intervalle de temps de rendez-vous sur chacun des multiplex raccordés à l'esclave (14).

5. Procédé selon la revendication 1, caractérisé en ce que, sur chacun des multiplex au départ de la station maître (10) prévus pour être connectés directement ou par routage à une station esclave, on réserve pour cette station esclave, le même ensemble d'intervalles de temps, c'est-à-dire le même nombre et les mêmes rangs, le nombre d'intervalles de temps de cet ensemble étant égal au premier entier supérieur ou égal au nombre total d'intervalles de temps nécessaires à la station, divisé par le nombre de multiplex non utilisés à fin de redondance au départ de la station maître vers cette station esclave.

6. Installation de communication à transmission de signaux numériques comprenant au moins une station maître (10) munie de liaisons de transmission numérique (16) avec des stations esclaves (14) par multiplex temporel, sous forme d'une trame respective de n canaux ou intervalles de temps, les stations esclaves (14) constituant au moins un groupe associé auxdites liaisons et ayant chacune un organe de brassage (12), localement et automatiquement initialisable, commandable pour soit insérer un canal d'ordre i déterminé dans la station (14) respective, soit le router en passant la station, chaque organe de brassage (12) et la station maître (10) contenant une identification d'un canal de signalisation affecté à l'organe de brassage et la station maître (10 étant prévue pour émettre, sur le canal de signalisation de chaque station esclave respective, l'ordre d'insertion du canal ou des canaux à affecter à la station esclave (14),
caractérisée en ce que les organes de brassage (12) de toutes les stations esclaves (14) contiennent des moyens pour effectuer l'initialisation en connectant l'un à l'autre le canal d'émission et le canal de réception de chacun des couples constitués chacun de canaux homologues sur deux liaisons de façon à passer toutes les stations et à effectuer un routage complet.

## Patentansprüche

1. Kommunikationsverfahren zur Übertragung digitaler Signale zwischen einer Masterstation (10) und Sklavenstationen (14) über ein Netzwerk, umfassend mindestens eine Masterstation (10), die mit digitalen Übertragungsverbindungen (16) durch eine Zeitmultiplexanordnung in Form eines Wiederholungsmuster von n Kanälen oder Zeitintervallen ausgestattet ist, mit den Sklavenstationen, die eine Gruppe bilden, die den Verbindungen zugeordnet ist und jeweils eine Mischeinrichtung (12) hat, die zum Aufschalten irgendeines Kanales in der jeweiligen Station oder des Rundlaufes mit Durchlaufen der Station steuerbar ist, wobei man zum Herstellen der Kommunikation und zum Aufschalten an jede Sklavenstation eine oder mehrere Befehlskanäle i, die unter den n Kanälen bestimmt werden, und, nachdem jeder Sklavenstation ein Signalübertragungskanal zugewiesen worden ist, welcher für sie passend ist,
(a) lokal und automatisch, die Mischeinrichtungen (12) von allen Sklavenstationen (14) initialisiert, dann
(b) die nötigen Aufschaltungen für jede Station dadurch erreicht, daß man über den Signalübertragungskanal der jeweiligen Sklavenstation (14) und von der Masterstation (10) mindestens einem Mischeinrichtungssteuerungsbefehl (14) sendet,
gekennzeichnet dadurch, daß man die Initialisierung durch Verbinden von dem einem mit dem anderen Sende- und Empfangskanal von jedem Paar, das aus zwei übereinstimmenden Kanälen über zwei Verbindungen besteht, derart durchführt, daß alle Stationen durchlaufen werden.

2. Verfahren nach Anspruch 1, gekennzeichnet dadurch, daß (c) man ein etwaiges Abschalten durch Senden von einem Befehl, der die entsprechende Sklavenstation (14) identifiziert, einleitet, wobei der Abschaltbefehl einen impliziten Rundlaufbefehl darstellt.

3. Verfahren nach Anspruch 1 oder 2, gekennzeichnet dadurch, daß der Befehl oder jeder Befehl mit einer Identifikationsadresse der Sklavenstation (14) ausgesendet wird.

4. Verfahren nach Anspruch 1, 2 oder 3, gekennzeichnet dadurch, daß man nach der Initialisierung und/oder nach einer Störung automatisch die Verbindung zu dem Master (10) durch einen Algorithmus zum zyklischen Abhören des Kanals, der bestimmt wird, durchführt, welcher das Aufschaltungs-Zeitintervall über alle Multiplexanordnungen, die an den Sklaven (14) angeschlossen sind, bildet.

5. Verfahren nach Anspruch 1, gekennzeichnet dadurch, daß man über alle Multiplexanordnungen, die, ausgehend von der Masterstation (10), dafür vorgesehen sind, daß sie direkt oder durch Rundlauf an eine Sklavenstation angeschlossen sind, für diese Sklavenstation die gleiche Gruppe von Zeitintervallen, d.h.die gleiche Anzahl und die gleichen Reihenfolgen, reserviert, wobei die Anzahl der Zeitintervalle von dieser Gruppe gleich einer ersten ganzen Zahl, die größer oder gleich der Gesamtzahl der Zeitintervallen, die in der Station notwendig sind, dividiert durch die Zahl der Multiplexanordnungen ist, die beim Ende der Übertragung nicht genutzt werden, der von der Masterstation in Richtung der Sklavenstation abgeht.

6. Kommunikationseinrichtung zur Übertragung digitaler Signale, umfassend mindestens eine Masterstation (10), die mit digitalen Übertragungsverbindungen (16) mit Sklavenstationen (14) durch Zeitmultiplexanordnungen in Form von einem jeweiligen Muster von n Kanälen oder Zeitintervallen ausgestattet ist, wobei die Sklavenstationen (14) mindestens eine Gruppe bilden, die den besagten Verbindungen zugeordnet ist und die je eine lokale und automatisch intialisierbare Mischeinrichtung (12) hat, die entweder zum Einschalten von einem Befehlskanal i, der in der jeweiligen Station (14) bestimmt wird, oder des Rundlaufes mit Durchlaufen der Stationen steuerbar ist, wobei jede Mischeinrichtung (12) und die Masterstation (10) eine Identifkation von einem Signalübertrgungskanal enthalten, die der Mischeinrichtung und der Masterstation (10) zugewiesen wurde, die vorgesehen sind, um über den Signalübertragungskanal von jeder jeweiligen Sklavenstation den Aufschaltungsbefehl des Kanals oder der Kanäle zum Aufschalten auf die Sklavenstation (14) zu senden,
gekennzeichnet dadurch, daß die Mischeinrichtungen (12) aller Sklavenstationen (14) Mittel zum Durchführen der Initialisierung durch Verbinden des einen mit dem anderen Sende- und Empfangskanal von jedem Paar, wovon jedes aus übereinstimmenden Kanälen mit zwei Verbindungen besteht derart, daß alle Stationen durchlaufen werden und ein kompletter Rundlauf durchgeführt wird.

## Claims

1. Communication method with transmission of digital signals between a master station (10) and slave stations (14) on a network comprising at least one master station (10) provided with digital transmission links (16) by time multiplex, in the form of a repetitive frame of n channels or time intervals, with the slave stations constituting a group associated with the said links and each having a sorting device (12) which can be controlled so as to insert any channel in the respective station or route it so as to bypass the station, such that, in order to establish communication and allocate to each slave station one or more channels of given order i amongst the n channels and after having allocated to each slave station a signalling channel which is peculiar to it,
(a) the sorting devices (12) of all the slave stations (14) are initialised, locally and automatically, and then
(b) the necessary insertions are brought about for each station by sending, over the signalling channel of the respective slave station (14) and from the master station (10), at least one instruction for controlling the sorting device (14),
characterised in that the initialisation is effected by connecting to each other the transmission and reception channels of each pair consisting of two homologous channels over two links so as to bypass all the stations.

2. Method according to Claim 1, characterised in that:
(c) where necessary a disconnection is brought about by sending an instruction identifying the appropriate slave station (14), the said disconnection instruction constituting an implicit routing instruction.

3. Method according to Claim 1 or 2, characterised in that the instruction or instructions are sent with an identification address for the slave station (14).

4. Method according to Claim 1, 2 or 3, characterised in that, after initialisation and/or after a fault, connection to the master (10) is effected automatically by a cyclical listening algorithm for the given channel which constitutes a rendezvous time interval on each of the multiplexes connected to the slave (14).

5. Method according to Claim 1, characterised in that, on each of the multiplexes leaving the master station (10) designed to be connected directly or by routing to a slave station, there is reserved for this slave station the same set of time intervals, that is to say the same number and the same rankings, the number of time intervals in this set being equal to the first integer greater than or equal to the total number of time intervals required for the station, divided by the number of multiplexes not used for the purpose of redundancy when transmitting from the master station to this slave station.

6. Communication installation with transmission of digital signals comprising at least one master station (10) provided with digital transmission links (16) with slave stations (14) by time multiplex, in the form of a respective frame of n channels or time intervals, the slave stations (14) constituting at least one group associated with the said links and each having a sorting device (12), locally and automatically initialisable, able to be controlled in order either to insert a channel of given order i in the respective station (14), or to route it so as to bypass the station, each sorting device (12) and the master station (10) containing an identification of a signalling channel allocated to the sorting device and the master station (10) being designed to send, over the signalling channel of each respective slave station, the insertion instruction for the channel or channels to be allocated to the slave station (14),
characterised in that the sorting devices (12) of all the slave stations (14) contain means for effecting the initialisation by connecting to each other the transmission channel and the reception channel of each of the pairs each consisting of homologous channels over two links so as to bypass all the stations and effect complete routing.
